# EUROPÄISCHE PATENTANMELDUNG

(11) **EP 4 703 160 A1**
(43) Veröffentlichungstag der Anmeldung: **04.03.2026**
(21) Anmeldenummer: 25197128.9
(22) Anmeldetag: 20.08.2025
(51) Int. Cl.: B60G 7/00, B21C 23/18

(54) **FAHRWERKSSTREBE FÜR FAHRZEUGE, INSBESONDERE KRAFTFAHRZEUGE, SOWIE VERFAHREN ZUR HERSTELLUNG EINER SOLCHEN FAHRWERKSSTREBE**

(30) Priorität: 27.08.2024 DE 102024002826
(71) Anmelder: Willi Elbe Gelenkwellen GmbH & Co. KG, 71732 Tamm (DE)
(72) Erfinder: Hauhoff, Jörg, 72655 Altdorf (DE); Sedlmeier, Ralf, 74385 Pleidelsheim (DE); Gerlach, Thomas, 74189 Weinsberg (DE)
(74) Vertreter: Patentanwälte Jackisch-Kohl und Kohl

(57) **Zusammenfassung**

Die Fahrwerksstrebe für Fahrzeuge, insbesondere Kraftfahrzeuge, hat mindestens einen länglichen Grundkörper (1), der an seinen Enden jeweils einen Anschluss (2, 3) aufweist. Damit die Fahrwerksstrebe einfach und kostengünstig so hergestellt werden kann, dass sie nur geringes Gewicht hat, dennoch aber eine hohe Belastbarkeit aufweist, ist zumindest der Grundkörper (1) als ein einstückiges Hohlprofilteil ausgebildet, das durch einen Fließpress- und einen anschließenden Biegeprozess hergestellt ist.

## Beschreibung

Die Erfindung betrifft eine Fahrwerksstrebe für Fahrzeuge, insbesondere Kraftfahrzeuge, nach dem Oberbegriff des Anspruches 1 sowie ein Verfahren zur Herstellung einer solchen Fahrwerksstrebe nach Anspruch 6.

Fahrwerksstreben in Kraftfahrzeugbau werden entweder als Gesenkschmiedeteile aus Vollmaterial oder aus Stahlblech in einer Schweißkonstruktion hergestellt. Wird die Fahrwerksstrebe durch ein Gesenkschmiedeteil gebildet, hat sie ein verhältnismäßig hohes Gewicht, was sich besonders bemerkbar macht, wenn das Fahrzeug mehrere solcher Fahrwerksstreben aufweist.

Wird die Fahrwerksstrebe als Schweißkonstruktion aus Stahlblech gebildet, dann hat sie zwar ein geringeres Gewicht als das Gesenkschmiedeteil, jedoch ist die Herstellung einer solchen Schweißkonstruktion aufwändig.

Der Erfindung liegt die Aufgabe zugrunde, die gattungsgemäße Fahrwerksstrebe sowie das Verfahren so auszubilden, dass die Fahrwerksstrebe einfach und kostengünstig so hergestellt werden kann, dass sie nur geringes Gewicht hat, dennoch eine hohe Belastbarkeit aufweist.

Diese Aufgabe wird bei der gattungsgemäßen Fahrwerksstrebe erfindungsgemäß mit den kennzeichnenden Merkmalen des Anspruches 1 und beim Verfahren erfindungsgemäß mit den Merkmalen des Anspruches 6 gelöst.

Bei der erfindungsgemäßen Fahrwerksstrebe ist zumindest der Grundkörper als einstückiges Hohlprofilteil ausgebildet, das durch einen Fließpress- und einen anschließenden Biegeprozess hergestellt ist. Aufgrund der Hohlprofilgestaltung hat die erfindungsgemäße Fahrwerksstrebe nur geringes Gewicht. Durch den Fließpressvorgang lässt sich die Hohlprofilgestaltung sehr einfach herstellen. Der anschließende Biegeprozess sorgt dafür, dass der nach dem Fließprozess entstehende Rohling in die für die Fahrwerksstrebe erforderliche Form gebogen wird. Aufgrund der Hohlprofilgestaltung zeichnet sich die erfindungsgemäße Fahrwerksstrebe durch ein geringes Gewicht, eine einfache und kostengünstige Herstellung sowie durch eine hohe Belastbarkeit aus.

Vorteilhaft hat der Grundkörper rechteckigen Querschnitt. Er gewährleistet bei gewichtsmäßig leichter Gestaltung eine hohe Festigkeit.

Hierzu trägt bei, wenn der Grundkörper quer zu seiner Längsrichtung gekrümmt ausgebildet ist.

Eine kostengünstige und einfache Herstellung ergibt sich, wenn der Grundkörper zumindest über einen Teil seiner Länge konstanten Querschnitt hat.

Bevorzugt besteht die Fahrwerksstrebe aus Aluminium oder einer Aluminium-Legierung. Dieses Material ermöglicht eine gewichtsmäßig leichte Gestaltung der Fahrwerksstrebe zusammen mit einer hohen Festigkeit bzw. Belastbarkeit.

Beim erfindungsgemäßen Verfahren wird der Rohling zunächst durch Fließpressen erzeugt, wobei der Rohling den Grundkörper und die Anschlüsse in einer Rohform aufweist. Anschließend wird dieser Rohling einem Biegeprozess unterworfen, mit der er in eine gekrümmte Form gebracht wird.

Mit einer solchen Verfahrensweise lässt sich einfach und kostengünstig die erfindungsgemäße Fahrwerksstrebe herstellen.

Vorteilhaft wird nach dem Fließpressen an den Rohling ein Anschluss angeformt. Dies kann beispielsweise mit Hilfe eines Gesenkes erreicht werden.

Der andere Anschluss der Fahrwerksstrebe wird in bevorzugter Weise bereits beim Fließpressen erzeugt. Der entsprechende Stempel ist so gestaltet, dass beim Fließpressen dieser Anschluss hergestellt wird, so dass ein zusätzlicher Arbeitsvorgang zur Erzeugung dieses Anschlusses nicht erforderlich ist.

Vorteilhaft ist es, die beiden Anschlüsse nach dem Biegen spanend zu bearbeiten.

Vorteilhaft für die Verfahrensführung ist es, wenn der Rohling nach dem Fließpressen einer Wärmebehandlung unterzogen wird. Dann können beispielsweise evtl. Spannungen im Rohling abgebaut werden, so dass der anschließende Biegevorgang problemlos durchgeführt werden kann.

Für den Fließpressvorgang kommen die üblichen Fließpress-Verfahren in Betracht. Besonders vorteilhaft wird ein Kaltfließpressen eingesetzt.

Eine bevorzugte Ausführung besteht darin, den Rohling in einem Vorwärts-Fließpressvorgang zu erzeugen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand zweier in den Zeichnungen dargestellter Ausführungsformen näher erläutert. Es zeigt
- Fig. 1: in perspektivischer Darstellung und im Längsschnitt eine erfindungsgemäße Fahrwerksstrebe,
- Fig. 2: die erfindungsgemäße Fahrwerksstrebe gemäß Fig. 1 in perspektivischer Darstellung,
- Fig. 3 bis Fig. 5: unterschiedliche Stufen bei der Herstellung der erfindungsgemäßen Fahrwerksstrebe,
- Fig. 6: in perspektivischer Darstellung einen Butzen zur Herstellung der erfindungsgemäßen Fahrwerksstrebe,
- Fig. 7: in Ansicht und teilweise im Schnitt ein Fließpresswerkzeug zur Herstellung der Fahrwerksstrebe in einer Ausgangsstellung,
- Fig. 8: das Fließpresswerkzeug gem. Fig. 7 nach dem Fließpressvorgang,
- Fig. 9: in Seitenansicht den Rohling der Fahrwerksstrebe nach dem Fließpressvorgang,
- Fig. 10: ein Gesenk zur Herstellung eines Anschlusses der Fahrwerksstrebe in einer Ausgangsstellung,
- Fig. 11: das Gesenk gemäß Fig. 10 nach dem Bearbeitungsvorgang,
- Fig. 12: in Seitenansicht den Rohling der Fahrwerksstrebe nach der plastischen Verformung im Gesenk,
- Fig. 13: in schematischer Darstellung und im Schnitt ein Biegewerkzeug in der Ausgangsstellung,
- Fig. 14: das Biegewerkzeug gemäß Fig. 13 nach dem Biegevorgang.

Die Fahrwerksstrebe wird bei Kraftfahrzeugen eingesetzt und hat einen über seine Länge quer zu seiner Längsrichtung gekrümmt verlaufenden Grundkörper 1, der an beiden Enden jeweils einen Anschluss 2 und 3 zur Befestigung im Fahrzeug aufweist.

Der Anschluss 2 wird durch zwei parallel zueinander liegende Schenkel 2a, 2b gebildet, die vorteilhaft gleich ausgebildet sind. Die beiden Schenkel 2a, 2b schließen jeweils über ein Querstück 5 an den Grundkörper 1 an, der vorteilhaft rechteckigen Querschnitt hat.

Die Schenkel 2a, 2b des Anschlusses 2 sind seitlich gegenüber dem Grundkörper 1 versetzt. Die Schenkel 2a, 2b sind nahe ihrem freien Ende mit einer Durchtrittsöffnung 4 für ein Befestigungsmittel, wie Schrauben, Bolzen und dgl., versehen.

Die Schenkel 2a, 2b sind über ihre Länge gerade ausgebildet und weisen über ihre Länge vorteilhaft konstante Dicke und Breite auf.

Der am anderen Ende des Grundkörpers 1 befindliche Anschluss 3 ist als Lagerauge ausgebildet, mit dem die Fahrwerksstrebe in bekannter Weise am Fahrwerk eines Kraftfahrzeuges befestigt werden kann. Der Anschluss 3 ist vorteilhaft so gestaltet, dass der Außendurchmesser 6 des Anschlusses 3 größer ist als die Höhe 7 des Grundkörpers 1. Er weist nahezu über seine gesamte Länge diese Höhe 7 auf. Je nach den Einbaugegebenheiten und Anforderungen an die Fahrwerksstrebe kann der Grundkörper 1 über seine Länge auch unterschiedliche Höhen aufweisen.

Der Grundkörper 1 hat einen Mittelteil 8, der als Hohlkörper ausgebildet ist. Er hat Seitenwände 8a, 8b, die durch Querwände 9, 10 miteinander verbunden sind. Die Querwände 9, 10 verlaufen vorteilhaft parallel zueinander. Auch die Seitenwände 8a, 8b liegen in vorteilhafter Weise parallel zueinander. Die Seitenwände 8a, 8b und die Querwände 9, 10 bilden die Außenseiten des Mittelteiles 8.

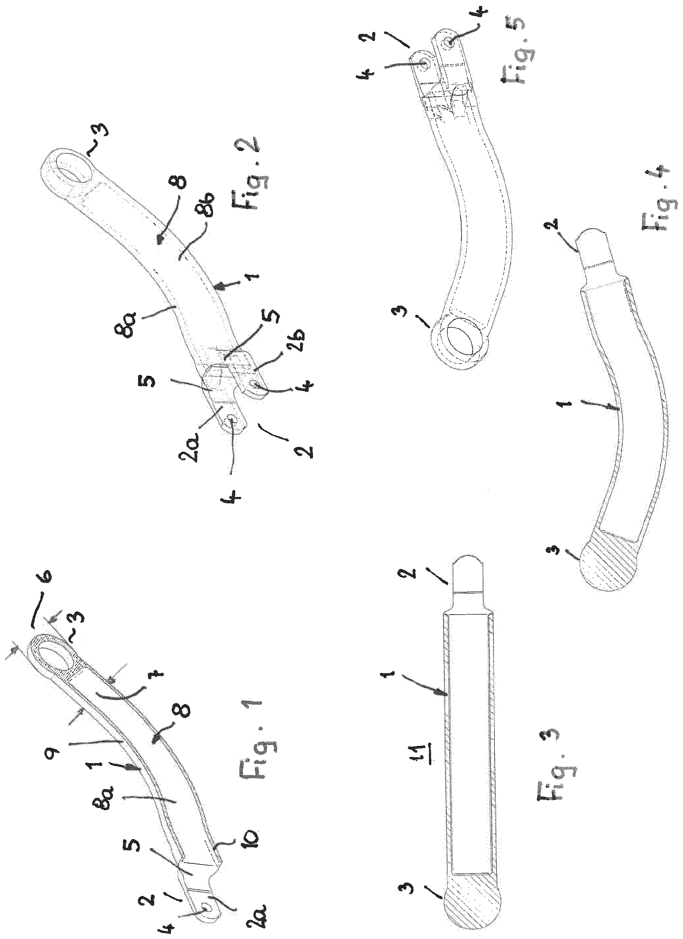

Wie aus den Fig. 1 und 2 hervorgeht, hat der Mittelteil 8 eckigen, vorteilhaft rechteckigen Querschnitt.

Die Fahrwerksstrebe ist einstückig ausgebildet und kann in noch zu beschreibender Weise im Wesentlichen durch einen Fließpress- und einen Biegevorgang hergestellt werden.

Der Anschluss 3 hat bevorzugt gleiche Breite wie die Querwände 9, 10.

Der Grundkörper 1 ist als Hohlprofilteil ausgebildet und besteht aus Aluminium oder einer Aluminium-Legierung. Dadurch hat die Fahrwerksstrebe ein nur geringes Gewicht. Im Vergleich zu herkömmlichen Fahrwerksstreben, die als Gesenkschmiedeteile hergestellt sind, ergibt sich eine erhebliche Gewichtsreduzierung, die größer als 10% ist. Dabei ermöglicht die Fahrwerksstrebe eine mit den bekannten Fahrwerksstreben vergleichbare Belastbarkeit bzw. Festigkeit.

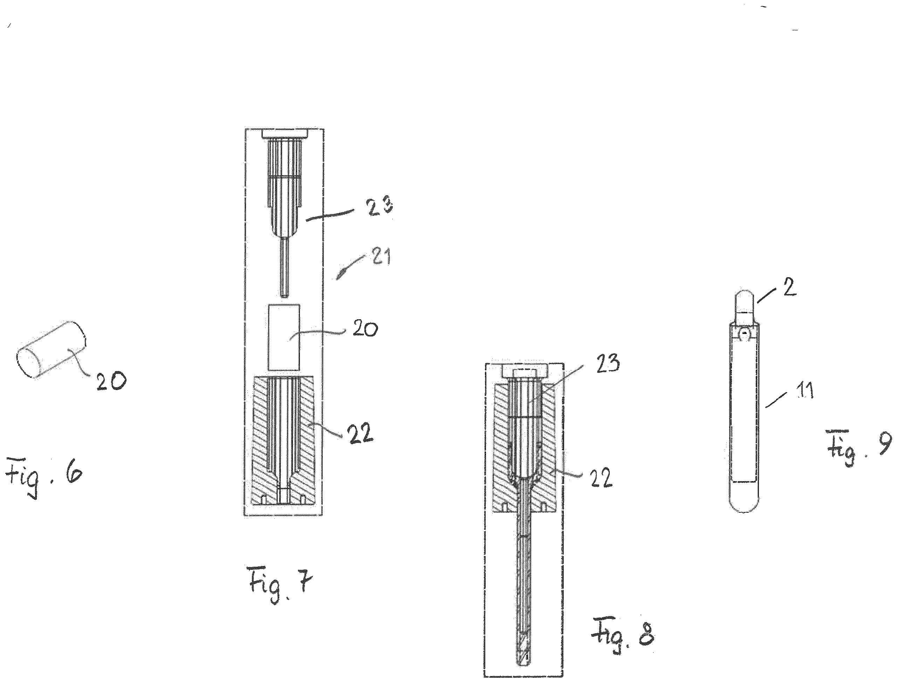

Bei der Herstellung wird in einem ersten Schritt ein Rohling 11 der Fahrwerksstrebe durch Fließpressen hergestellt (Fig. 6 bis 9). Das Fließpressen erfolgt durch einen Kaltverformungsprozess, um aus Aluminium oder einer Aluminium-Legierung gefertigte Hohlprofilteile zu fertigen. Sie haben nur eine geringe Wandstärke, doch eine hohe Festigkeit.

Der Rohling 11 wird durch einen Hohl-Fließpressvorgang erzeugt, wobei der Rohling 11 sowohl durch ein Vorwärts-Fließpressen als auch durch ein Rückwärts-Fließpressen erzeugt werden kann. Dabei wird der Rohling mit einer überwiegend dünnen Wandung hergestellt.

Beim Kaltfließpressen wird eine Oberfläche mit guten Rauheitswerten und einer sehr hohen Maß- und Formgenauigkeit hergestellt.

Als Werkstoff für die Fahrwerksstrebe wird vorteilhaft eine Aluminium-Magnesium-Silizium-Legierung eingesetzt, die eine hochfeste Legierung für hochbeanspruchte Strukturanwendungen ist. Beispielhaft wird hierfür eine ENAW6082-Legierung eingesetzt.

Fig. 3 zeigt diesen Rohling 11 nach dem Fließpressvorgang. Er hat bereits den Grundkörper 1 sowie die Anschlüsse 2, 3, die jedoch noch nicht als Anschlüsse ausgebildet, sondern als Rohform noch unbearbeitet sind.

Die zunächst gerade sich erstreckende Fahrwerksstrebe wird einer Wärmebehandlung insoweit unterzogen, dass evtl. vorhandene Spannungen im Rohling 11 abgebaut werden und der Rohling 11 in einem nächsten Verfahrensschritt durch einen Biegevorgang in die gewünschte gebogene Form gebracht werden kann (Fig. 4).

Das für den Biegevorgang (Fig. 4) eingesetzte Biegewerkzeug ist so gestaltet, dass der nach dem Fließpressen gebildete Rohling 11 in die gewünschte Form gebogen werden kann. Da die Fahrwerksstrebe aus einem Hohlprofilteil gebildet ist, kann der Biegevorgang einfach und zuverlässig durchgeführt werden.

Als letzter Schritt (Fig. 5) wird der Rohling 11 spanend bearbeitet, um die Anschlüsse 2, 3 herzustellen. Die spanende Bearbeitung der Fahrwerksstrebe erfolgt nach dem Biegevorgang. So können am Anschluss 3 die Durchtrittsöffnungen 4 und am Anschluss 3 das entsprechende Lagerauge mit hoher Genauigkeit hergestellt werden.

Im Zuge der Herstellung der Fahrwerksstrebe durch Fließpressen, Biegen und spanende Abarbeitung können Wärmebehandlungen angewendet werden, um den Fließpressvorgang oder auch den Biegevorgang in günstiger Weise zu beeinflussen.

Anhand der Figuren 6 bis 14 wird an einem Ausführungsbeispiel erläutert, wie die Fahrwerksstrebe gefertigt wird. Diese Verfahrensweise ist nur als Beispiel zu verstehen und stellt keine Beschränkung auf dieses Verfahren dar.

Als Ausgangsmaterial für die Fahrwerksstrebe wird ein Butzen 20 eingesetzt, der als Vollzylinder ausgebildet ist (Fig. 6). Der Butzen 20 wird in einem Fließpresswerkzeug 21 in bekannter Weise plastisch verformt. Es hat eine Matrize 22 und einen Stempel 23, der beim Fließpressvorgang in die Matrize 22 eintaucht und den Butzen 20 so verformt, dass der Rohling 11 erzeugt wird.

Der Stempel 23 ist so ausgebildet, dass der Rohling 11 nach dem Fließpressvorgang den Anschluss 2 mit den beiden Schenkeln 2a, 2b (Fig. 2) aufweist. Zur Herstellung der Fahrwerksstrebe gemäß Fig. 1 hat der Stempel 23 eine entsprechende Form.

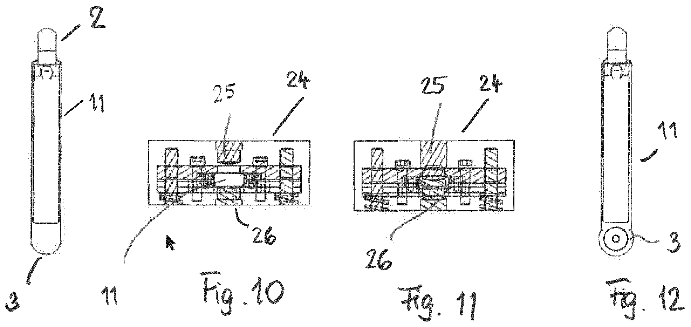

Anschließend wird der Rohling 11 in ein Gesenk 24 eingelegt (Fig. 10 und 11), das ein Obergesenk 25 und ein Untergesenk 26 aufweist. Mit dem Gesenk 24 wird am Rohling 11 der Anschluss 3 in bekannter Weise angeformt. Für den Umformvorgang wird der Rohling 11 mit einem Ende auf das Untergesenk 26 aufgelegt und anschließend das Obergesenk 25 nach unten gefahren.

Nach diesem Umformvorgang ist die Fahrwerksstrebe mit dem Anschluss 2 und dem Anschluss 3 versehen, wobei der Anschluss 2 mit den beiden Schenkeln 2a, 2b versehen ist, die beim Fließpressvorgang erzeugt worden sind.

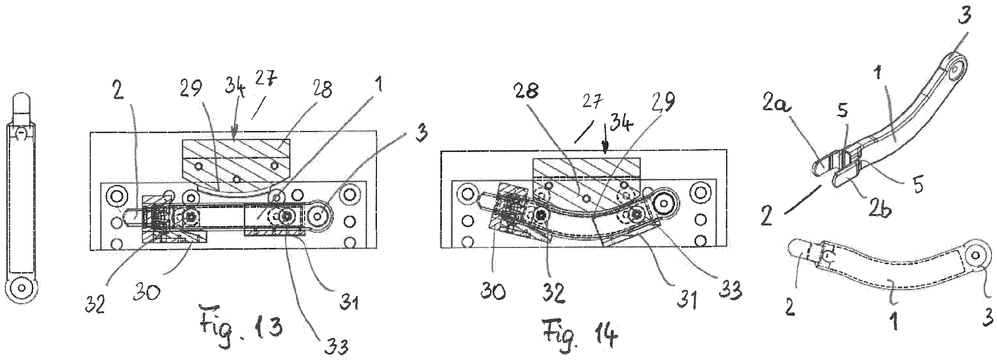

Damit die Fahrwerksstrebe ihre beschriebene gebogene Form erhält, wird sie mittels eines Biegewerkzeuges 27 (Fig. 13 und 14) über ihre Länge gebogen. Das Biegewerkzeug 27 hat einen Biegestempel 28, der eine der gewünschten Biegung entsprechende Biegefläche 29 aufweist.

Der Biegestempel 28 ist in Höhenrichtung gegenüber zweier Auflagen 30, 31 verstellbar. Die beiden Auflagen 30, 31 sind um zwei parallel zueinander liegende Schwenkachsen 32, 33 schwenkbar gelagert. Die Schwenkachsen 32, 33 liegen senkrecht zur Verstellrichtung 34 des Biegestempels 28.

Die beiden Auflagen 30, 31 liegen mit Abstand voneinander und sind so angeordnet, dass die Fahrwerksstrebe in der geraden Form mit den beiden Anschlüssen 2, 3 über die voneinander abgewandten Enden der Auflagen 30, 31 versteht (Fig. 13). Anschließend wird der Biegestempel 28 in Richtung 34 nach unten bewegt, wodurch die Fahrwerksstrebe über ihre Länge in die gewünschte Form gebogen wird. Bei diesem Biegevorgang schwenken die Auflagen 30, 31 um die Schwenkachsen 32, 33, so dass die Fahrwerksstrebe zuverlässig in die gebogene Form gebracht werden kann. Der Krümmungsradius des Grundkörpers 1 der Fahrwerksstrebe wird durch die gekrümmte Biegefläche 29 des Biegestempels 28 hergestellt.

Die Auflagen 30, 31 sind so ausgebildet, dass sie die Enden der Fahrwerksstrebe übergreifen, so dass sie mit dem Biegestempel 28 zuverlässig gebogen werden kann.

Der Biegestempel 28 und die Auflagen 30, 31 sind auswechselbar im Biegewerkzeug 27 vorgesehen, so dass diese Teile je nach gewünschtem Biegeradius der Fahrwerksstrebe ausgetauscht werden können.

Falls notwendig, können anschließend noch spanende Bearbeitungen an den Anschlüssen 2, 3 der Fahrwerksstrebe vorgenommen werden.

## Patentansprüche

1. Fahrwerksstrebe für Fahrzeuge, insbesondere Kraftfahrzeuge, mit mindestens einem länglichen Grundkörper (1), der an seinen Enden jeweils einen Anschluss (2, 3) aufweist,
**dadurch gekennzeichnet, dass** zumindest der Grundkörper (1) als ein einstückiges Hohlprofilteil ausgebildet ist, das durch einen Fließpress- und einen anschließenden Biegeprozess hergestellt ist.

2. Fahrwerksstrebe nach Anspruch 1
**dadurch gekennzeichnet, dass** der Grundkörper (1) rechteckigen Querschnitt hat.

3. Fahrwerksstrebe nach Anspruch 1 oder 2,
**dadurch gekennzeichnet, dass** der Grundkörper (1) quer zu seiner Längsrichtung gekrümmt ausgebildet ist.

4. Fahrwerksstrebe nach einem der Ansprüche 1 bis 3,
**dadurch gekennzeichnet, dass** der Grundkörper (1) zumindest über einen Teil seiner Länge konstanten Querschnitt hat.

5. Fahrwerksstrebe nach einem der Ansprüche 1 bis 4,
**dadurch gekennzeichnet, dass** die Fahrwerksstrebe aus Aluminium oder einer Aluminium-Legierung besteht.

6. Verfahren zur Herstellung einer Fahrwerksstrebe nach einem der Ansprüche 1 bis 5,
**gekennzeichnet durch** folgende Verfahrensschritte:
a) Erzeugung eines Rohlings (11) durch Fließpressen, der den Grundkörper (1) und die Anschlüsse (2, 3) in Rohform aufweist.
b) Biegen des Rohlings (11) in eine gekrümmte Form.

7. Verfahren nach Anspruch 6,
**dadurch gekennzeichnet, dass** nach dem Fließpressen an den Rohling (11) ein Anschluss (3) angeformt wird.

8. Verfahren nach Anspruch 6 oder 7,
**dadurch gekennzeichnet, dass** beim Fließpressen der eine Anschluss (2) erzeugt wird,

9. Verfahren nach einem der Ansprüche 6 bis 8,
**dadurch gekennzeichnet, dass** die beiden Anschlüsse (2, 3) nach dem Biegen spanend bearbeitet werden.

10. Verfahren nach einem der Ansprüche 6 bis 9,
**dadurch gekennzeichnet, dass** der Rohling (11) nach dem Fließpressen einer Wärmebehandlung unterzogen wird.

11. Verfahren nach einem der Ansprüche 6 bis 10,
**dadurch gekennzeichnet, dass** das Fließpressen ein Kaltfließpressen ist.

12. Verfahren nach einem der Ansprüche 6 bis 11,
**dadurch gekennzeichnet, dass** der Rohling (11) mit einem Vorwärts-Fließpressen erzeugt wird.
